Europäisches Patentamt

European Patent Office

Office européen des brevets

(11) Publication number: **0 009 409**
**B2**

(12) **NEW EUROPEAN PATENT SPECIFICATION**

(45) Date of publication of the new patent specification: **17.11.88**

(51) Int. Cl.⁴: **H 01 J 29/98, H 04 N 5/68**

(21) Application number: **79301969.6**

(22) Date of filing: **21.09.79**

(54) Cathode ray tube arc-over protection.

(30) Priority: **26.09.78 US 946017**

(43) Date of publication of application:
**02.04.80 Bulletin 80/07**

(45) Publication of the grant of the patent:
**07.12.83 Bulletin 83/49**

(45) Mention of the opposition decision:
**17.11.88 Bulletin 88/46**

(84) Designated Contracting States:
**AT BE DE FR GB IT NL SE**

(56) References cited:
**DE-A-1 512 130**
**DE-A-2 405 609**
**DE-A-2 553 624**
**GB-A-1 532 228**
**US-A-3 735 039**

**Service-Schaltbild of colour television set
'Ultracolor P 4626 electronic CM' of the
German firm SABA' (1976)
VDRG Handbuch 1976/77, Verlag Neuer
Merkur Gmbh, Munich, FRG, page 26**

(73) Proprietor: **RCA CORPORATION**
**30 Rockefeller Plaza**
**New York, NY 10020 (US)**

(72) Inventor: **Forster, Gerhard**
**Fohrenweg 8**
**CH-8116 Wurenlos (CH)**

(74) Representative: **Smith, Thomas Ian Macdonald
et al
GE/RCA Patent Operation Burdett House, 4th
Floor 15-16 Buckingham Street
London WC2N 6DU (GB)**

EP 0 009 409 B2

Courier Press, Leamington Spa, England.

## Description

This invention relates to. arc-over reduction in cathode ray tubes.

Accelerating potential or ultor voltage for the electron beams within a cathode ray tube is generated by rectification of an alternating current voltage and coupling the rectified voltage to the ultor terminal of the cathode ray tube. The ultor terminal is coupled to an ultor inner conductive coating of the cathode ray tube envelope. The inner coating forms one electrode of an ultor capacitance. An outer conductive coating forms the other electrode which serves as the ultor ground return terminal for ultor current. Such an arrangement is described in British Patent Specification 1 212 552.

The anode electrode of the electron gun is connected to the inner conductive coating, typically by means of spring contacts. The ultor accelerating potential serves as an energizing voltage for the anode electrode. Energizing voltages for the other electrodes, such as the screen, grid, and cathode electrodes, are developed by associated energizing circuitry external to the cathode ray tube. Connecting base pins in the base of the cathode ray tube couple the associated electron gun electrodes to energizing voltages through an appropriate socket.

The socket for coupling energizing voltages to the connecting base pins of the cathode ray tube may also contain one or more spark gaps each connected between a base pin connector and a ground return terminal. Such spark gaps conduct when the voltage on a particular connector exceeds a predetermined value, so as to protect circuit components connected to the connector. Typical termination structure to the outer conductive coating may comprise a U-shaped braid of copper wire closely pressed over the outer conductive coating on the cathode ray tube envelope. One or several copper wires connect various points along the copper braid to the ground return base pin terminal on the socket. The ground return terminal on the socket is also connected to the common ground current return terminal of the energizing circuitry or to a chassis grounding terminal if the energizing circuitry and chassis have mutual ground current returns.

During cathode ray tube arc-over, the ultor voltage across the ultor capacitance may be coupled to one or more of the connecting base pins, thereby subjecting the energizing circuitry and other circuitry sharing common current return paths to overvoltages from the relatively low impedance ultor capacitance source. Sensitive semiconductor devices may be damaged due to the overvoltages developed and the relatively large arc-over currents flowing in the chassis and energizing circuitry.

Conventional techniques for arc-over protection involve shunting the arc-over current away from the energizing circuitry directly to the ultor ground return terminal through a spark gap coupled to the cathode ray tube connecting base pins. As indicated above, such spark gaps may be included in the socket for the cathode ray tube. Relatively high impedance resistors may also be coupled between various ones of the base pins and the energizing circuitry to provide a voltage drop across the resistor for limiting arc-over voltages.

Nevertheless, arc-over current oscillation within the energizing circuitry may still develop. Stray capacity between the ultor ground return terminal and the chassis or energizing circuitry may provide a sufficiently low impedance AC current path from the ground return terminal on the socket to sustain relatively large and undesirable arc-over current oscillations. Such oscillations should be substantially reduced.

In a prior colour television receiver of the manufacturer SABA (Ultracolor model P 4626 electric PM, chassis type FF041) a resistor having an effect on the arc-over current is included in or as the previously mentioned connection between the common ground return terminal on the socket and a ground terminal of the chassis.

In contrast to this, in a circuit according to the present invention for reducing arc-over current in which a first conductor couples the second (current return) terminal of the spark gap(s) to the low voltage side (ground return terminal) of the ultor capacitance to form therebetween a first physical branch for arc-over current, and a second physical current branch couples that spark gap electrode to a common current return terminal of the energizing circuitry referred to, a resistor is connected between the low voltage side of the ultra capacitance and the common current return terminal in a third physical current branch which, for AC arc-over currents flowing in the current path provided by the mentioned stray capacity, is in parallel with that stray capacity, the resistance of the damping resistor being of such value (such as between about 22 and 100 ohms) as to integrate the voltage across the stray capacity at the frequency of the AC arc-over current in a manner that provides damping of current oscillations occurring within the energizing circuitry as a result of arc-over.

Figure 1 illustrates in partial schematic a cathode ray tube and associated structure which embodies the invention;

Figure 2 illustrates an electrical schematic equivalent circuit associated with the structure of Figure 1; and

Figures 3 and 4 illustrate arc-over current waveforms associated with the structure of Figure 1 and with the electrical schematic of Figure 2.

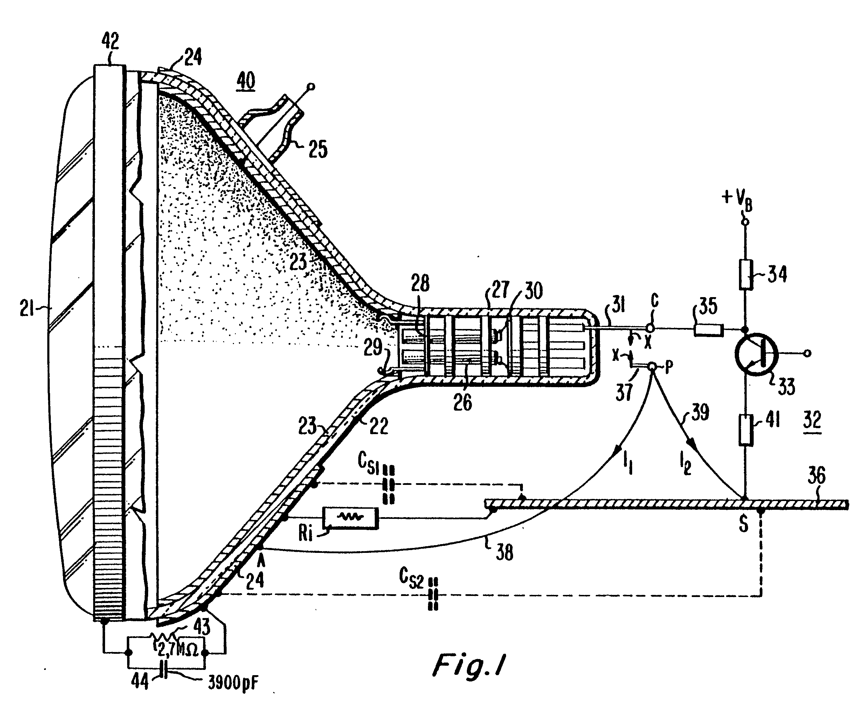

As illustrated in the partially schematic Figure 1, a cathode ray tube 21, of a television receiver, for example, includes an envelope 22, an inner conductive coating 23 and an outer conductive coating 24. Coatings 23 and 24 form the plates or electrodes of an ultor capacitance 40. During operation of the television receiver, a high voltage accelerating potential is developed across ultor capacitance 40. An alternating current voltage, such as developed by a flyback transformer, not illustrated. is rectified and coupled to inner coating 23 through a conventional ultor high voltage termination structure 25.

A metal rimband 42 is placed about cathode ray tube 21 to reduce implosion hazards. A parallel arrangement of a resistor 43 and a capacitor 44, tuned to the AC line mains supply frequency of 50 Hz or 60 Hz, for example, is coupled between the rimband and the outer conductive coating 24. This parallel arrangement provides AC line electrical shock hazard protection.

A conventional electron gun structure 26 is located interior of the neck portion 27 of cathode ray tube envelope 22. A spring contact 29 connects inner coating 23 to an anode electrode 28 of electron gun 26. The ultor high voltage provides the energizing voltage for the anode electrode 28.

Energizing voltages for the other electrodes of electron gun 26, such as the focus and screen electrodes, are coupled through base pins from energizing circuitry associated with the cathode ray tube and other television receiver components. As illustrated in Figure 1, energizing voltage for the cathode electrode 30, for example, is coupled through a cathode base pin 31 and a suitable socket (not shown) from a video output energizing circuit 32, only partly illustrated.

Video output circuit 32 includes a driver transistor 33 coupled to a DC voltage source $+V_B$ through a resistor 34. Video input signals are coupled to the base of transistor 33 from conventional video processing circuitry, not illustrated. Cathode drive signals at the collector of transistor 33 are coupled to cathode base pin 31 through a resistor 35. The termination from energizing circuit 32 to base pin 31 may be conventional and is indicated generally by a solder terminal C.

The emitter of transistor 33 is coupled to a common ground current return terminal S of energizing circuitry 32 through a resistor 41. Such common return terminal S may be located on a frame or chassis 36 or on a separate printed circuit board, with the printed circuit board and chassis sharing mutual ground return paths.

Other electrode base pins, not illustrated, may be electrically interconnected with their respective energizing circuits in a manner similar to that described for the cathode base pin 31.

Terminal C may be included in a socket (not shown) with other terminals connected to other elements of the cathode ray tube. The elements of one or more spark gaps, such as X-X, shown in Fig. 1, may also be included in the socket, with the ground return of two or more of the spark gaps being connected to a common terminal, such as terminal P, through lead 37. Electrical connection is provided from ground lead 37 to the ultor outer conductive coating 24 and to either the chassis 36 ground as illustrated in Figure 1 or to the common current return terminals of the energizing circuitry for electron gun 26, not illustrated. Typically, conductor lengths 38 and 39 are connected respectively between lead 37 and outer coating 24, and between lead 37 and chassis ground. The termination structures for the conductor lengths 38 and 39 to lead 37, outer conductive coating 24, and chassis 36 ground may be conventional and are indicated generally in Figure 1 by respective solder terminals P, A, and common return terminal S.

Conductor length 38 forms a first direct current path from ground lead 37 to the ultor current return terminal of outer coating 24. Conductor length 39 forms a second direct current path from ground lead 37 to the chassis or energizing circuitry common current return terminal S.

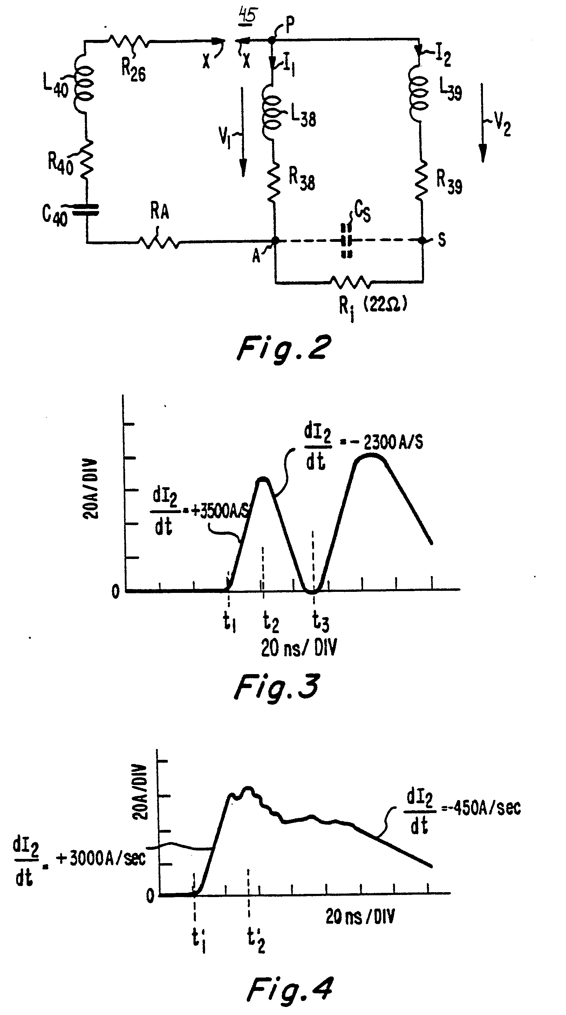

An AC current path for cathode ray tube arc-over currents between chassis 36 and the ultor current return terminal of outer coating 24 is formed by means of the stray capacitance between chassis 36 and outer coating 24, as illustrated in Figure 1 by capacitors $C_{S1}$ and $C_{S2}$ representing stray capacitance between various chassis points and outer coating 24. Although only $C_{S1}$ and $C_{S2}$ are illustrated, the stray capacitance of the chassis is distributed over the entire structure of chassis 36 and may be represented by the capacitor $C_S$ of the circuit 45, schematically illustrated in Figure 2.

Circuit 45 represents an electrical schematic circuit of arc-over current paths of the ultor capacitance 40 discharge current during arc-over. For example, the ultor voltage at the anode electrode 28 of electron gun 26 may, under fault conditions during arc-over, be coupled to various ones of the other electrodes such as the focus electrode. This ultor voltage is then transmitted to the associated base pins causing arc-over between many of these pins.

As illustrated by the arrows X-X in Figure 1, arc-over to cathode base pin 31 will cause the spark gap to conduct current to return lead 37. Much of the ultor voltage will be coupled to terminals P and C. A first arc-over current I will flow in conductor 38 to provide the discharge path for ultor return current. As illustrated in Figure 2, a voltage $V_1$ is developed from terminal P to terminal A, the outer seating 24 termination structure terminal. This voltage will be developed across the series impedance of an inductor $L_{38}$ and resistor $R_{38}$ representing respectively the inductance and resistance of conductor 38. $R_A$ represents the resistance of the termination structure between terminal A and outer conductive coating 24, $C_{40}$, $R_{40}$, and $L_{40}$ represent respectively the capacity, resistance, and distributed inductance of the ultor capacitance 40. $R_{26}$ represents the resistance of the termination structure between electron gun 26 and the inner coating 23.

Neglecting for the moment the effect of a resistor $R_1$ coupled between terminal A and chassis terminal S, the voltage $V_1$ acts as a driving potential during arc-over for generating a second oscillatory arc-over current $I_2$ flowing in conductor 39, chassis 36, and the ground current return paths of the electron gun electrode energizing circuitry. As illustrated in Figure 2, an under-damped oscillatory current $I_2$ is coupled to ultor ground return terminal A by means of the stray capacitance $C_2$. A voltage $V_2$ from terminal P to terminal S is produced by current $I_2$ through the series impedance of an inductor $L_{39}$ and resistor $R_{39}$, representing respectively the inductance and resistance of conductor 39.

As illustrated in Figure 3, during typical arc-over situations, the underdamped oscillatory current $I_2$, upon electrode arc-over, begins near time $t_1$ and continues to oscillate for several cycles, reaching a first maximum near time $t_2$ and a first minimum near time $t_3$.

With oscillatory current $I_2$ as illustrated in Figure 3, the voltage $V_2$ will assume relatively large values of both positive and negative magnitudes. The positive peak magnitude will be produced by the resistive voltage drop $I_2$ developed across $R_{39}$ and also by the positive inductive voltage drop developed across $L_{39}$ caused by the relatively large $+ dI_2/dt$ current change during the interval $t_1$-$t_2$, for example, as illustrated in Figure 3. A relatively large negative peak magnitude for voltage $V_2$ will also be produced by the negative inductive voltage drop developed across $L_{39}$ caused by the relatively large $-dI_2/dt$ current change during the interval $t_2$-$t_3$, for example.

The voltage $V_2$ will be coupled back through the spark gap to various base pins, such as cathode base pin 31, to the various energizing circuitry, such as cathode drive circuitry 32, producing harmful voltage stresses within the circuitry and possibly damaging sensitive semiconductor components. Oscillatory currents similar to that of current $I_2$ may also flow in other circuits having mutual or common ground current return paths with chassis 36. Voltages with relatively large positive and negative magnitudes similar to those of voltage $V_2$ may be developed in these other circuits. Sensitive semiconductor devices such as integrated circuits may be damaged, as they are especially unable to withstand substantial voltages of polarity opposite to that normally imposed.

In the SABA television receiver previously referred to, the mentioned resistor having the effect on the arc-over current is connected between points corresponding to the points P and S, that is, in the place of the conductor 39. In contrast, a feature of the present invention is to damp the oscillatory arc-over current $I_2$, which is capacitively coupled to the ultor current return terminal A, by means of a resistor $R_i$ coupled between chassis 36 and the outer conductive coating 24, thereby paralleling the stray capacitance $C_S$, as illustrated schematically in Figure 2. The resistance value of resistor $R_i$ is selected such that resistor $R_i$ functions to integrate the voltage across stray capacitance $C_S$ at the frequencies of the arc-over currents and substantially damp the oscillatory current $I_2$. Resistor $R_i$ may typically comprise a carbon, carbon composition, or metal film construction. The exact termination locations of resistor $R_i$ on both the outer conductive coating termination structure and on the chassis 36 may vary widely from receiver to receiver.

As illustrated in Figure 4, with resistor $R_i$ coupled across capacitance $C_S$, current $I_2$ is damped, with smaller magnitudes for both $+dI_2/dt$, between times t.507—$t_2$, and $-dI_2/dt$ after time $t_2$. The underdamping of current $I_2$ is substantially eliminated and both positive and negative magnitude voltage stresses are substantially reduced.

Typical values for selected discrete and distributed components are approximately as follows:

| | |
|---|---|
| Resistor $R_a$: | 5 to 50 ohms |
| Resistor $R_i$: | 22 to 100 ohms |
| | (depending on receiver design) |
| Resistor $R_{40}$: | 20 to 200 ohms |
| Resistor $R_{38}$: | less than 1 ohm |
| Resistor $R_{39}$: | less than 1 ohm |
| Resistor $R_{43}$: | 2.7 megohm |
| Capacitor $C_S$: | 30 to 300 pF |
| Capacitor $C_{40}$: | 700 to 3000 pF |
| Capacitor $C_{44}$: | 3900 pF |
| Inductor $L_{38}$, $L_{39}$: | 10 nH/cm of conductor |

## Claims

1. A circuit for reducing arc-over current in a cathode ray tube, comprising:
a cathode ray tube (21) having an ultor capacitance (40) with a high voltage side (25, 23) and a low voltage side (A, 24);
an electron gun structure (26) having an anode coupled to the high voltage side (25, 23) of said ultor capacitance (40);
energizing circuitry including a video output circuit (32) coupled to other electrodes of said electron current structure and having a common current return terminal (S);
a spark gap (X-X) having first (C) and second (P) electrodes, said first electrode (C) being coupled to one (31) of said other electrodes of said electron gun structure;
a first conductor (38) coupling said second electrode (P) of said spark gap to said low voltage side (A, 24) of said ultor capacitance to form therebetween a first physical branch for arc-over currents;
a second physical current branch (39) coupling said second electrode (P) of said spark gap (X-X) to said common current return terminal (S), wherein stray capacitance ($C_S$) between said low voltage side (A, 24) of the ultor capacitance and said common current return terminal (S) forms, together with said second current branch, a current path which for AC arc-over currents exists across said first current branch;

and a resistor having effect on the arc-over current:

characterised in that said resistor (R$_i$) is connected between the low voltage side (A, 24) of said ultor capacitance (40) and said common current return terminal (S) in a third physical current branch which is in parallel with said stray capacitance for AC arc-over currents flowing in said current path, the resistance of the resistor (R$_i$) being of such value as to integrate the voltage across the stray capacitance (C$_s$) at the frequencies of the AC arc-over current in a manner that provides damping of current oscillations occurring within said energizing circuitry (32) as a result of arc-over.

2. A circuit according to claim 1 wherein the resistor (R$_i$) has a resistance of about 22 to 100 ohms.

**Patentansprüche**

1. Schaltungsanordnung zum Verringern von Überschlagstrom in einer Kathodenstrahlröhre, mit

einer Kathodenstrahlröhre (21), welche eine Endanodenkapazität (40) mit einer Hochspannungsseite (25, 23) und einer Niederspannungsseite (A, 24), aufweist,

einer Elektronenstrahlerzeugungsanordnung (26), welche eine mit der Hochspannungsseite (25, 23) der Endanodenkapazität (40) gekoppelte Anode enthält,

einer Speiseschaltung, die eine mit anderen Elektroden der Elektronenstrahlerzeugungsanordnung gekoppelte Videoendschaltung (32) und eine gemeinsame Stromrückflußklemme (6) enthält,

einer Funkenstrecke (X-X) mit einer ersten (C) und einer Zweiten (P) Elektrode, von denen die erste (C) mit einer (31) der anderen Elektroden der Elektronenstrahlerzeugungsanordnung gekoppelt ist,

einem ersten Leiter (38), der die Zweite Elektrode (P) der Funkenstrecke mit der Niederspannungsseite (A, 24) der Endanodenkapazität koppelt, um dazwischen einen ersten körperlichen Zweig für Überschlagströme zu bilden,

einem zweiten körperlichen Stromzweig (39), der die zweite Elektrode (P) der Funkenstrecke (X-X) mit der gemeinsamen Stromrückflußklemme (S) koppelt, wobei eine Streukapazität (C$_s$) zwischen der Niederspannungsseite (A, 24) der Endanodenkapazität und der gemeinsamen Stromrückflußklemme (S) zusammen mit dem zweiten Stromzweig einen Stromweg bildet, der für Überschlagwechselströme über den ersten Stromzweig vorhanden ist, und

einem Widerstand, der einen Einfluß auf den Überschlagstrom hat, dadurch gekennzeichnet, daß der Widerstand (R$_i$) zwischen die Niederspannungsseite (A, 24) der Endanodenkapazität (40) und die gemeinsame Stromrückflußklemme (S) in einen dritten körperlichen Stromzweig geschaltet ist, welcher der Streukapazität für die in dem erwähnten Stromweg fließenden Überschlag-

wechselströme parallel liegt, wobei der Widerstand (R$_i$) einen solchen Widerstandswert hat, daß die Spannung an der Streukapazität (C$_s$) bei den Frequenzen der Überschlagwechselströme derart integriert wird, daß Stromschwingungen gedämpft werden, die in der Speiseschaltung (32) infolge eines Überschlags auftreten.

2. Schaltungsanordnung nach Anspruch 1, dadurch gekennzeichnet, daß der Widerstand einen Wert von etwa 22 bis 100 Ohm hat.

**Revendications**

1. Circuit pour réduire le courant de dépassement de l'arc dans un tube à rayons cathodiques, comprenant:

un tube à rayons cathodiques (21) ayant une capacité finale (40) avec un côté haute tension (25, 23) et un côté basse tension (A, 24);

une structure de canon d'électrons (26) ayant une anode couplée au côté haute tension (25,23) de ladite capacité finale (40);

un montage d'excitation comprenant un circuit de sortie vidéo (32) couplé à d'autres électrodes de ladite structure du courant d'électrons et ayant une borne commune de retour de courant (S);

un éclateur (X-X) ayant des première (C) et seconde (P) électrodes, ladite première électrode (C) étant couplée à l'une (31) des autres électrodes de ladite structure de canon d'électrons;

un premier conducteur (38) couplant ladite seconde électrode (P) dudit éclateur audit côté basse tension (A, 24) de ladite capacité finale pour former une première branche physique pour les courants de dépassement de l'arc;

une seconde branche physique de courant (39) couplant ladite seconde électrode (P) dudit éclateur (X-X) à ladite borne commune de retour de courant (S), où la capacité parasite (C$_s$) entre ledit côté basse tension (A, 24) de la capacité finale et ladite borne commune de retour de courant (S) forme, avec ladite seconde branche de courant, un trajet de courant qui, pour les courants alternatifs de dépassement de l'arc, existe à travers ladite première branche de courant;

et une résistance ayant un effet sur le courant de dépassement de l'arc:

caractérisé en ce que ladite résistance (R$_i$) est connectée entre le côté basse tension (A, 24) de ladite capacité finale (40) et ladite borne (S) commune de retour de courant dans une troisième branche physique de courant qui est parallèle à ladite capacité parallèle parasite pour les courants alternatifs de dépassement de l'arc s'écoulant dans ledit trajet de courant, la valeur de la résistance (R$_i$) étant d'une valeur telle qu'elle intègre la tension dans la capacité parasite (C$_s$) aux fréquences du courant alternatif de dépassement de l'arc d'une manière produisant un amortissement des oscillations de courant se produisant dans ledit montage d'excitation (32) par suite du dépassement de l'arc.

2. Circuit selon la revendication 1, où la résistance (R$_i$) a une valeur d'environ 22 à 100 ohms.

Fig.1

Fig.2

Fig.3

Fig.4